# EUROPÄISCHE PATENTSCHRIFT

(11) **EP 1 619 943 B1**
(45) Veröffentlichungstag und Bekanntmachung des Hinweises auf die Patenterteilung: **09.06.2010**
(21) Anmeldenummer: 04729844.3
(22) Anmeldetag: 28.04.2004
(51) Int. Cl.: A01M 1/14

(54) **INSEKTENFALLE MIT TRANSPARENTER KLEBEFOLIE**
INSECT TRAP COMPRISING A TRANSPARENT ADHESIVE FILM
PIEGE A INSECTE COMPRENANT UN FILM ADHESIF TRANSPARENT

(30) Priorität: 08.05.2003 DE 10320488
(43) Veröffentlichungstag der Anmeldung: 01.02.2006
(73) Patentinhaber: ICS Innovative Care Systems Andernach GmbH, 56626 Andernach (DE)
(72) Erfinder: FELDHEGE, Michael, 56068 Koblenz (DE); ROREGER, Michael, 56567 Neuwied (DE); KLOCZKO, Malgorzata, 53577 Neustadt/Wied (DE)
(74) Vertreter: Schmidt, Werner
(86) Internationale Anmeldenummer: PCT/EP2004/004491
(87) Internationale Veröffentlichungsnummer: WO 2004/098279

(56) Entgegenhaltungen:
- EP-A- 0 354 875
- EP-A- 0 659 339
- EP-A- 0 947 134
- US-A- 4 244 134
- US-A- 5 396 729

## Beschreibung

Die Erfindung betrifft eine Insektenfalle aus einem einen Innenraum umschließenden Behälter, der mindestens eine Öffnung und mindestens eine Trägerfolie mit einer vom Innenraum zugänglichen Klebeschicht umfasst, wobei die Trägerfolie zumindest im Bereich der Klebeschicht ein transparentes Fenster in einer Wandung des Behälters ist.

Eine derartige Insektenfalle ist als Kleidermotten-Klebefalle des Unternehmens "ARIES Umweltprodukte" aus 27367 Horstedt bekannt. Die Falle besteht aus einer Schachtel, einem Klebebrett, und einem Pheromon-Dispenser. Zum Aufbau der Falle wird der Dispenser mittig auf das Klebebrett aufgesetzt und in die mit mehreren Öffnungen versehene Schachtel so eingelegt und mittels Haftetiketten so befestigt, dass das Klebebrett zum Schachtelinnenraum hin ausgerichtet ist. Beim Einschieben des klebrigen Klebebretts besteht die Gefahr des Anhaftens des Klebebretts an der Behälterinnenwandung. Die einzufangenden Insekten fliegen oder kriechen durch den Lockstoff angelockt in die Schachtel und gelangen dort auf die Klebefolie. Das im dunklen Innenraum der Schachtel gelegene Klebebrett lässt sich nur aufwendig auf den Erschöpfungsgrad der Falle untersuchen.

Aus der US 5396 729 A ist eine drei- bzw. vierkantrohrförmige, an den Stirnseiten offene Ungezieferfalle bekannt. In mindestens einer der Wandungen dieser Falle ist ein transparenter, mit Klebstoff versehener, fensterartiger Haftstreifen angeordnet. Dabei zeigt die klebrige Seite des Haftstreifens nach innen.

Die EP 0 354 875 A beschreibt eine dreikantrohrförmige Fluginsektenfalle, die u.a. eine durchsichtige, innen mit Klebstoff bestrichene Grundfläche hat. Die durchsichtige Grundfläche ist austauschbar.

Der vorliegenden Erfindung liegt daher die Problemstellung zugrunde, eine hochwirksame Insektenfalle zu entwickeln, die aus wenigen unterschiedlichen Bestandteilen besteht, die einfach zu montieren und zu installieren ist und deren Erschöpfungsgrad man einfach visuell kontrollieren kann.

Das Problem wird mit den Merkmalen des Hauptanspruchs gelöst. Dazu hat die Klebeschicht der Trägerfolie einen äußeren Rand, der nicht an die Fensteröffnung der die Trägerfolie tragenden Wandung heranreicht. In der die Trägerfolie tragenden Wandung sind mindestens zwei Klemmelemente zum positionierenden, lösbaren Fixieren der Trägerfolie angeordnet.

Diese Insektenfalle besteht aus einem Behälter mit mindestens einer Öffnung als offener Zugang und mindestens einer mittels einer transparenten Klebefolie verschlossenen Öffnung, wobei die Fläche der verschlossenen Öffnung in der Regel größer ist als die Summe der Flächen aller offenen Zugänge. Der Behälter besteht beispielsweise aus Pappe, Karton oder einem ggf. teilweise auch transparenten Verbundwerkstoff. Der Behälter ist im Ausführungsbeispiel nur beispielhaft quaderförmig gestaltet. Er kann stattdessen z.B. auch zylindrisch, halbzylindrisch, prismenförmig oder trapezförmig sein. Die Klebeschicht der Falle befindet sich auf einer transparenten Trägerfolie, die vor ihrer Anwendung mit einer abziehbaren Schutzschicht abgedeckt ist.

Zur Anwendung der Insektenfalle für kriechenden Insekten wie Käfer, Asseln, Kakerlaken, Silberfischchen, Ameisen, u.s.w., sowie auch von Fluginsekten wie Motten, Mücken, Fliegen, Wespen etc., wird die Klebeschicht von der Schutzschicht befreit und mittels der Trägerfolie über z.B. einer Öffnung des Behälters positioniert. Hierbei zeigt die Klebeschicht nach innen. Die Insekten können in den Behälter durch mindestens eine offen bleibende Öffnung in den Behälter eindringen. Sie werden dann z.B. bei dem Versuch den Behälter durch jene Öffnung zu verlassen, die mit der transparenten Klebefolie abgedeckt ist, an dieser festgehalten.

Die transparente Klebefolie ermöglicht eine schnelle visuelle Prüfung des Erschöpfungsgrades der Klebeschicht. Dazu kann der Behälter in einfacher Weise so gegen das Licht gehalten werden, dass die Belegung der Klebeschicht mit gefangen Insekten oder mit Staub und anderen Schmutzpartikeln problemlos erkennbar ist. Eine am Behälter angebrachte Aufhängelasche erweitert zusätzlich das Anwendungsspektrum.

Eine verbrauchte Klebefolie wird einfach entnommen und durch eine neue ersetzt. Der Behälter selbst kann, sofern er keine mechanische Beschädigung erfährt, über einen längeren Zeitraum verwendet werden.

Weitere Einzelheiten der Erfindung ergeben sich aus den nicht oder nur teilweise zitierten Unteransprüchen und der nachfolgenden Beschreibung einer schematisch dargestellten Ausführungsform:
- Figur 1:: Insektenfalle in montiertem Zustand;
- Figur 2:: Faltschachtel in geöffnetem Zustand;
- Figur 3:: Querschnitt der Faltschachtel;
- Figur 4:: Querschnitt der Faltschachtel mit reduzierter Schachtelhöhe.

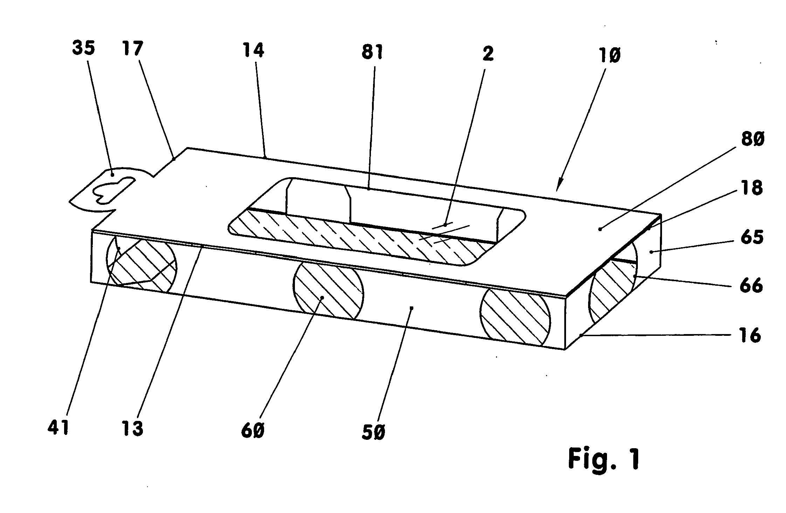

Figur 1 zeigt als einsatzbereite Insektenfalle eine geschlossene, quaderförmige Faltschachtel (10) mit einem hinter einem Deckel (70) liegenden Fenster (2) und mehreren Öffnungen (41, 51-53, 66, 71-72). Die Faltschachtel (10), die einen Innenraum (1) umgibt, hat vier zu einer Art von Vierkantrohr verbundene Wandungen (30, 50, 60, 70), von denen je zwei zueinander parallel angeordnet sind. Die Stirnseiten bilden zwei Klappen (40, 65). Die Faltschachtel (10) ist aus einem einzigen, einteiligen Kartonzuschnitt, dessen Fasern vorzugsweise quer zu einem Deckel (80) orientiert sind. Der Karton hat beispielsweise ein spezifisches Gewicht von ca. 250 g/m². Er ist zumindest bereichsweise bedruckt und ggf. mit einem Klarsichtlack überzogen. Die maximale Höhe der Faltschachtel (10) beträgt z.B. ca. 20 Millimeter. Die Schachtel (10) ist z.B. 9,5-mal länger und 4,5-mal breiter als dieses Mass.

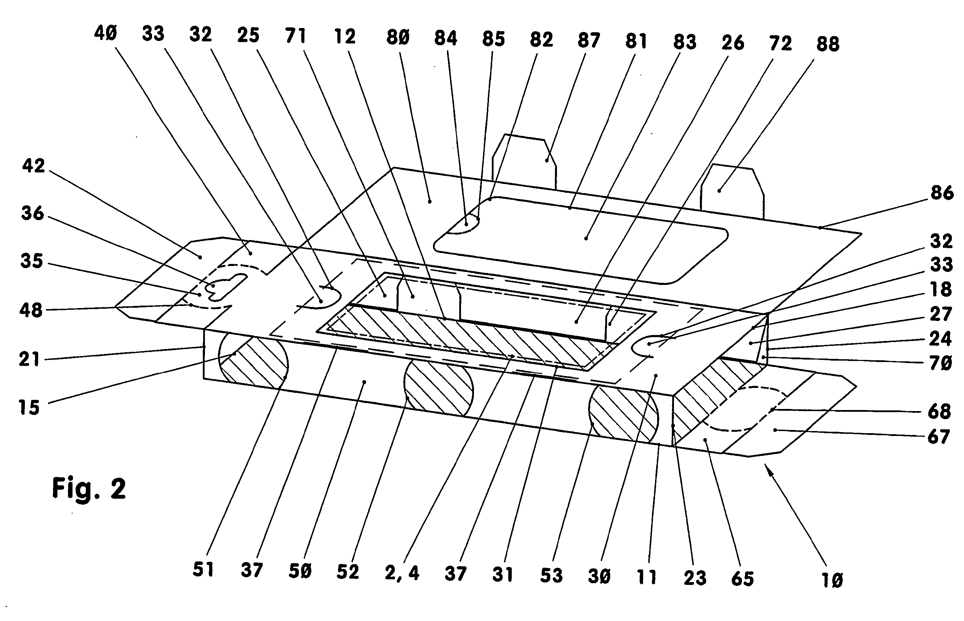

Die Faltschachtel (10) hat einen ebenen, geschlossenen Boden (60) an den sich gemäß Figur 2 nach vorn eine Seitenwandung (50) und zur rechten Seite eine Stirnwandung (65) anschließt. Die Seitenwandungen (50, 65) sind vom Boden durch durchgehende Prägerillen getrennt, wobei letztere bei der montierten Faltschachtel (10) die Außenkanten (11) und (16) bilden.

Die Seitenwandung (50) hat drei Öffnungen (51-53). Jede Öffnung erstreckt sich zwischen dem Boden (60) und einer diesem gegenüber liegenden Fensterwandung (30). Die Öffnungskontur dieser Öffnungen (51-53) entspricht z.B. bereichsweise einer Kreisfläche, deren Durchmesser dem Eineinhalbfachen der Schachtelhöhe entspricht. Die Schachtelhöhe ist hierbei der maximale Abstand zwischen dem Boden (60) und der Fensterwandung (30). Da die Schachtelhöhe kleiner ist als der Kreisdurchmesser der Öffnungskontur, fehlt der Öffnung nach den Figuren 1 und 2 oben und unten je ein Kreisabschnitt, wobei beide Kreisabschnitte z.B. die gleiche Größe haben. Die Mitten der beiden äußeren Öffnungen (51, 53) sind von den kurzen Außenkanten (21, 23) jeweils um eine Schachtelhöhe entfernt, während die Mitte der mittleren Öffnung (52) in der Mitte der Schachtellänge liegt.

Die rechte Stirnklappe (65), vgl. Figur 2, an der sich eine Stirnlasche (67) anschließt, hat ebenfalls eine Öffnung (66). Letztere ist Teil einer Kreisfläche, der oben und unten ein Kreisabschnitt fehlt. Die Mitte der Kreisfläche liegt in der geometrischen Mitte der Stirnwandung (65). Die Kreisfläche hat einen Durchmesser, der z.B. dem 2,25-fachen der maximalen Schachtelhöhe entspricht. Nach oben und unten ist die Kreisfläche geradlinig beschränkt durch die für das Falten der Stirnwandung (65) und der Stirnlasche (67) verwendeten Prägerillen, die die parallelen Begrenzungslinien bilden. Beide Prägerillen sind an der fertig gefalteten Schachtel (10) Außenkanten (16, 18) mittlerer Länge.

An die Seitenwandung (50) schließt sich aus der Sicht der Stanzformabwicklung die Fensterwandung (30) an, an der auf der linken Seite nach Figur 2 die Stirnwandung (40) mit der Aufhänglasche (35) absteht. Die Fensterwandung (30) hat mittig eine zentrale rechteckige Fensterinnenöffnung (31), die im vormontierten Zustand beispielsweise mit einem Ausdrückdeckel verschlossen ist. Die in den Figuren nicht dargestellte Ausdrückplatte ist durch eine Schlitzstanzung größtenteils von der Fensterwandung (30) abgetrennt. Nur wenige, sehr kurze Stege halten den Ausdrückplatte in der Fensterwandung (30), so dass beim Aufbau der Insektenfalle der Ausdrückplatte mit geringem Kraftaufwand entfernt werden kann.

Die Breite der Fensterwandung (30) zwischen den langen Außenkanten (13, 14) und der Fensterinnenöffnung (31) beträgt z.B. 65% der maximalen Schachtelhöhe. Die Fensterinnenöffnung (31) ist beispielsweise doppelt so lang wie breit.

In Längsrichtung der Fensterwandung (30) ist rechts und links neben der Fensterinnenöffnung (31) eine u-förmige Stanzung (32) zu sehen. Sie sitzen mittig zur Querrichtung der Fensterwandung (30) und umranden Klemmzungen (33), die jeweils zur Fensterinnenöffnung (31) hin orientiert sind.

Im Bereich der langen Außenkante (13), die zwischen der Fensterinnenwandung (30) und der Seitenwandung (50) liegt, befinden sich zwei parallel zur Außenkante (13) verlaufende Längsschlitze (37). Diese Längsschlitze (37) haben eine Breite, die zumindest annähernd der der Kartonstärke entspricht. Die Schlitze (37) sind in Längsrichtung gegenüber den Seitenöffnungen (51-53) versetzt angeordnet.

Nach Figur 2 beinhaltet die linke Stirnklappe (40) - zumindest im Kartonzuschnitt - die Aufhängelasche (35). Letztere ist im Bereich der Stirnklappe (40) durch eine Schlitzstanzung (48) oder Perforation an drei Seiten umgeben. Die Stirnklappe (40) ist von der Fensterwandung (30) durch zwei seitlich der Aufhängelasche (35) gelegene Prägerillen abgegrenzt. An die Stirnklappe (40) schließt sich eine Stirnlasche (42) an, die sich von der Stirnklappe (40) über eine weitere Prägerille abhebt. Die Schlitzstanzung (48) für die Aufhängelasche (35) ist so ausgelegt, dass bei einem Falzen der Stirnklappe (40) und der Stirnlasche (42) die Aufhängelasche (35) nicht an der Fensterwandung (30) abknickt, vgl. Figur 1. Aus der Aufhängelasche (35) ist eine Aufhängeausnehmung (36) ausgestanzt.

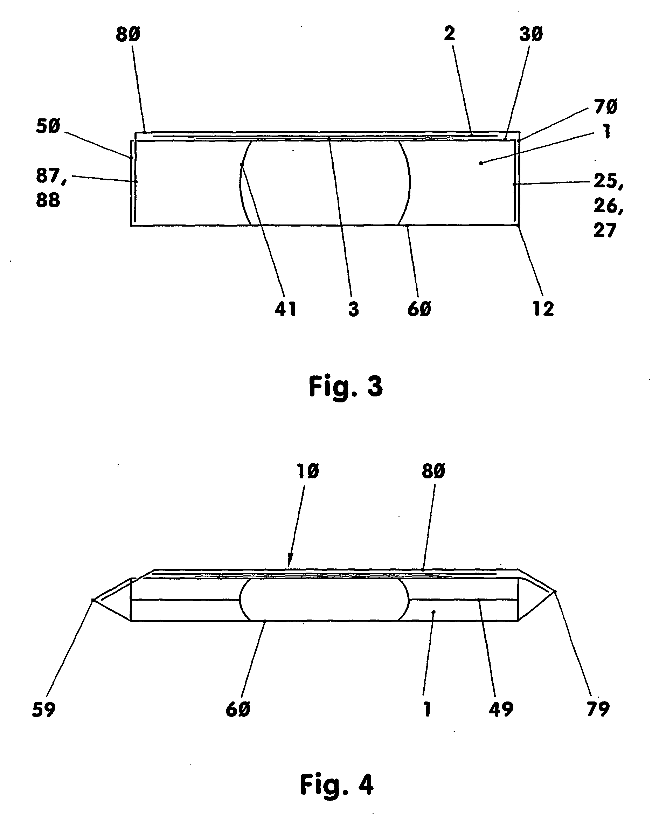

An die Fensterwandung (30) schließen sich im Bereich der Außenkante (14) drei Klebelaschen (25-27) an. Die Außenseiten der Klebelaschen (25-27) sind mit der Innenseite der Seitenwandung (70) verklebt. Die Seitenwandung (70) ist einteilig unten mit dem Boden (60) und oben mit einem Deckel (80) verbunden. Zwischen den Wandungen (60) und (70) liegt die lange Außenkante (12), vgl. Figur 3. Auch diese Kante (11) ist wie die Kante (14) durch eine Prägerille vorgeprägt.

Die Seitenwandung (70) umgibt z.B. deckungsgleich mit den Klebelaschen (25-27) zwei Öffnungen (71, 72). Diese Öffnungen haben jeweils eine Außenkontur, die einer Einstecklasche (87, 88) entspricht, die am freien, langen Außenrand (86) des Deckels (80) angeordnet sind. Sie sind zudem genau so positioniert, dass sie zur jeweils benachbarten mittleren Außenkante (17) und (18) je einen Abstand haben, den die Öffnungen (71, 72) zu den jeweils benachbarten kurzen Außenkanten (22) und (24) aufweisen. Da die Klebelaschen (25-27) den Anfang und die Einstecklaschen (87, 88) das Ende der plan abgewickelten Stanzform der vorliegenden Faltschachtel (10) darstellen, können die Stanzformen zumindest in Längsrichtung verlustfrei aneinandergefügt ausgestanzt werden.

Auch die Seitenöffnungen (71, 72) haben eine Höhe, die der maximalen Höhe des Innenraumes (1) entspricht.

Der hier rechteckige Deckel (80) der Faltschachtel (10) hat eine zentrale Fensteröffnung (81) mit z.B. abgerundeten Ecken (82). Die Fensteröffnung (81), die ca. doppelt so lang wie breit ist, hat zu den langen Außenkanten (13) und (14) jeweils einen Abstand, der 80% der maximalen Schachtelhöhe entspricht. Die Fensteröffnung (81) ist, solange die Faltschachtel (10) als Transportbehälter benutzt wird, mittels einer Ausdrückplatte (83) verschlossen, vgl. Figur 2. Die noch im Deckel (80) integrierte Ausdrückplatte (83) ist über entlang der Fensteröffnung (81) angeordnete Schlitzstanzungen abgegrenzt. Die zwischen jeweils benachbarten Schlitzstanzungen befindenden kurzen Stege halten die Ausdrückplatte (83) in ihrer Position. Zum Vereinfachen des Ausdrückens der Ausdrückplatte (83) befindet sich z.B. am rechten Rand der Ausdrückplatte (83) eine bogenförmige Schlitzstanzung (85). Letztere separiert eine kreisabschnittförmige, kleine Hilfsausdrücklasche (84).

Die am freien langen Rand (86) des Deckels (80) angeordneten Einstecklaschen (87, 88) verjüngen ihre Kontur - parallel zum Rand gemessen - zu ihrem freien Ende hin. Das erleichtert bei der Montage der Insektenfalle das Einstecken der Einstecklaschen (87, 88) in die in der Fensterwandung (30) angeordneten Schlitze (37).

Alle in den Karton der Stanzform (1) eingearbeiteten Prägerillen befinden sich auf der glatten Kartonoberseite.

Der Kunde erwirbt die Insektenfalle als fertig gefaltete Faltschachtel (10). Die Ausdrückplatte (83) und ggf. die in der Fensterwandung (30) integrierte Ausdrückplatte sind noch nicht ausgetrennte Bestandteile der Schachtel (10). Im Innenraum (1) der Schachtel (10) befindet sich ein Stapel einzeln oder paketweise eingeschweißter Fenster (2).

Das einzelne Fenster ist eine transparente, flexible Folie (2) mit z.B. einer Wandstärke von 0,3 Millimeter. Die Folie (2), z.B. eine nichtklebende Trägerfolie, ist gerade so lang, dass sie unter die Klemmzungen (33) der Fensterwandung (30) geschoben werden kann, ohne zu beulen, vgl. Figur 2, dort ist die Folie (2) gestrichelt eingezeichnet. Die Folie (2) hat eine Breite, die fast an die langen Außenkanten (13) und (14) heranreicht. Die Folie kann zur Ausbildung bestimmter Insektenlockmuster ein- oder mehrfarbig gestaltet sein. Auch holographische Strukturen, vgl. DE 102 27 947 oder mechanisch eingeprägte Muster sind denkbar.

Die holographischen Strukturen sind beispielsweise Teil eines filmförmigen Materials, das Ergebnis eines holographischen Aufnahmeverfahrens zur Abbildung dreidimensionaler Objekte ist.

Auf der Unterseite der Folie (2) nach Figur 2 ist eine Klebeschicht (3) aufgetragen. Diese Klebeschicht (3) hat einen äußeren Rand (4), der in Figur 2 mit einer strichpunktierten Linie dargestellt ist. Der äußere Rand (4) liegt einige Millimeter innerhalb der Fensterinnenöffnung (31), so dass die Klebeschicht (3) beim Einsetzen der Folie (2) in die Fensterinnenöffnung (31) nicht mit der Fensterwandung (30) verkleben kann.

Der auf die Folie (2) aufgebrachte in der Regel transparente Klebstoff (3) kann flächig oder teilflächig aufgetragen sein. Beim nicht vollflächigen Auftrag kann der Klebstoff (3) z.B. in parallelen Streifen, in sternförmigen Streifen, als Punktemuster oder als unregelmäßiger, sich mehrfach überschneidender Fadenzug aufgetragen werden, vgl. DE 101 63 617. Die verschiedene Fadenzüge bildenden Fäden werden aus einer Klebstoffmasse gefertigt, die zunächst in eine fließfähige Konsistenz gebracht wurde. Die Masse wird aus mehreren Austrittsdüsen auf eine bewegliche Unterlage, z.B. die Folie (2) aufgetragen. Eine Transport der Folie (2) relativ zu den Austrittsdüsen bewirkt, dass die Klebstoffmasse die Form von Fäden annimmt.

Alle Auftragungsarten, die einen z.B. unregelmäßigen Rand bedingen, haben zwangsläufig eine längere Übergangszone vom nicht klebenden Fenster zur klebenden Fensterfläche. Folglich können sich hierdurch - unter der Vermeidung eines sog. Randeffekts - mehr Insekten am Klebeflächenrand anlagern.

Der Klebstoff kann auch mindestens einen Wirkstoff enthalten, z.B. einen Insektenlockstoff wie Attraktantien oder Pheromone. Ferner können in ihm Farbstoffe und Pigmente eingelagert sein.

Um ein Austrocknen und unbeabsichtigtes Anhaften an der Verpackung zu vermeiden kann zumindest die Klebstofffläche mit einem z.B. mit einem Trennmittel beschichteten wiederablösbaren Abdeckblatt geschützt sein.

Nach den Figuren 3 und 4 ist das Fenster (2) in der Insektenfalle so eingesetzt, dass die Klebeschicht (3) nach innen zeigt. Die Schachtel (10), die auf allen Seitenwandungen mit Ausnahme der Stirnwandung (40) stehen kann, wird als Falle für kriechende Insekten immer so ausgerichtet, dass der Deckel (80) auf dem die Schachtel (10) tragenden Untergrund aufliegt. Die kriechenden Insekten gelangen durch die Öffnungen (41, 51-53, 66, 71, 72) in den Innenraum (1). Dort kontaktieren sie die Klebeschicht (3). Ggf. kann die Klebefolie (2) anstatt an der Außenseite der Fensterwandung (30) auch an der Innenseite des Deckels (3) angeordnet werden.

In Figur 4 ist eine Faltschachtel (10) dargestellt, die in den Seitenwandungen (40, 50, 65, 70) z.B. parallel zum Boden verlaufende Sicken eingeprägt hat. Diese Sicken befinden sich hier auf halber Schachtelhöhe. Wird nun vor dem Einklemmen der Klebefolie (2) - der Deckel (80) gegen den Boden (60) gepresst, knicken die Seitenwandungen (40, 50, 65, 70) aufgrund der Sicken nach außen aus und der Abstand zwischen dem Deckel (80) und dem Boden(60) verringert sich. Der Behälter (10) zeigt dann außen u.a. die Knicklinien (43, 59, 79). Je nach Anpressdruck beim Verformen der Schachtel (10) kann die Schachtelhöhe problemlos auf 3 bis 8 Millimeter reduziert werden. Insekten die sich meist in Ritzen und Spalten aufhalten wie z.B. Silberfischchen oder Kellerasseln, bevorzugen solche niedrigen Fallen, deren Innenhöhe teilweise ihren Schulterhöhen entspricht.

Die Faltschachtel (10) lässt jederzeit wieder auf ihre maximale Höhe zurückverformen.

Zum Fangen von sich in Schränken aufhaltenden Motten wird die Faltschachtel (10) mit der Aufhängelasche (35) an der Schrankinnenwand aufgehängt oder mit einer Seitenwandung (50, 70) auf den Schrankfachboden an die Schrankinnenwand angelehnt.

Fliegende Insekten wie z.B. Stuben- und Eintagsfliegen oder Wespen werden beispielsweise bei Tageslicht in mit Außenfenstern ausgestatteten Räumen mit am Fenster aufgehängter Insektenfalle gefangen. Der Deckel (80) ist hierbei zum Fenster hin orientiert, so dass das durch eine der Öffnungen (41, 51-53, 66, 71, 72) einfliegende Insekt in Innenraum (1) die lichtdurchflutete Klebefläche (3) der Trägerfolie (2) berührt, da es durch diese ins Freie zu fliegen versucht.

Im Innenraum (1) der Insektenfalle kann mindestens eine Lockvorrichtung angeordnet werden, die physikalische und/oder chemische Reize abgibt. Die physikalischen Reize sind z.B. optische oder akustische Signale, die dauerhaft oder intervalartig nach einem Aktivieren der Insektenfalle abgegeben werden. Hierbei ist die Lockvorrichtung beispielsweise an eine elektrische Batterie angeschlossen. Diese Batterie kann z.B. eine flache Knopfzelle sein, die werksseitig zusammen mit dem Leuchtmittel oder dem Tongenerator und dessen Schaltung im Rand der einzelnen Trägerfolie (2) integriert ist. Beim Einbau der Trägerfolie (2) in den Behälter (10) kann dann die Vorrichtung durch Entfernen eines Isolierstreifens aktiviert werden.

Ggf. kann die Vorrichtung auch eine elektrische Miniaturheizung sein, die zur Anlockung bestimmter wärmesuchender Insekten zumindest einen kleinen Teil des Innenraums (1) um einige Grad oder auch nur einige Zehntel Grad erwärmt.

### Bezugszeichenliste:

- 1: Innenraum
- 2: Klebefolie, Trägerfolie, Fenster
- 3: Klebeschicht
- 4: Rand der Klebeschicht

- 10: Behälter, Faltschachtel, Schachtel
- 11, 12: lange Außenkanten, unten
- 13, 14: Lange Außenkanten, oben
- 15, 16: mittlere Außenkanten, unten
- 17, 18: mittlere Außenkanten, oben

- 21, 22: kurze Außenkanten, links
- 23, 24: kurze Außenkanten, rechts
- 25, 26, 27: Klebelaschen

- 30: Fensterwandung
- 31: Fensterinnenöffnung
- 32: Klemmzungenstanzungen
- 33: Klemmzungen
- 35: Aufhängelasche
- 36: Aufhängeausnehmung, Euroloch
- 37: Längsschlitz für zu (87, 88)

- 40: Stirnklappe, Stirnwandung
- 41: Stirnöffnung
- 42: Stirnlasche, Einsteckzunge
- 48: Schlitzstanzung
- 49: Knicklinie

- 50: Seitenwandung mit drei Öffnungen
- 51, 52, 53: Seitenöffnungen
- 59: Knicklinie
- 60: 65
- 66: 67
- 68: Boden
- Stirnklappe, Stirnwandung: Stirnöffnung
- Stirnlasche, Einsteckzunge: Schlitzstanzung

- 70: Seitenwandung mit zwei Öffnungen
- 71, 72: Seitenöffnungen
- 79: Knicklinie

- 80: Deckel
- 81: Fensteröffnung
- 82: Ecken, abgerundet
- 83: Ausdrückplatte
- 84: Hilfsausdrücklasche
- 85: Schlitzstanzung
- 86: Rand, lang
- 87, 88: Einstecklaschen

## Patentansprüche

1. Insektenfalle aus einem einen Innenraum (1) umschließenden Behälter (10), der mindestens eine Öffnung (41, 51-53, 66, 71, 72) und mindestens eine lösbare Trägerfolie (2) mit einer vom Innenraum (1) zugänglichen Klebeschicht (3) umfasst, wobei die Trägerfolie (2) zumindest im Bereich der Klebeschicht (3) ein transparentes Fenster in einer Wandung des Behälters (10) ist,
**dadurch gekennzeichnet,**
**dass** die Klebeschicht (3) der Trägerfolie (2) einen äußeren Rand (4) hat, der nicht an die Fensteröffnung der die Trägerfolie (2) tragenden Wandung (30) heranreicht und
**dass** in der die Trägerfolie (2) tragenden Wandung (30) mindestens zwei Klemmelemente (33) zum positionierenden, lösbaren Fixieren der Trägerfolie (2) angeordnet sind.

2. Insektenfalle gemäß Anspruch 1, **dadurch gekennzeichnet, dass** die transparente Fläche des Fensters (2) größer ist als die Gesamtfläche aller Öffnungen (41, 51-53, 66, 71, 72).

3. Insektenfalle gemäß Anspruch 1, **dadurch gekennzeichnet, dass** die transparente Fläche des Fensters (2) bei einem Behälter (10) mit verschiedengroßen Öffnungen mindestens sechsmal größer ist als die Gesamtfläche der größten Öffnung (41, 66).

4. Insektenfalle gemäß Anspruch 1, **dadurch gekennzeichnet, dass** die transparente Fläche des Fensters (2) bei einem Behälter (10) mit verschiedengroßen Öffnungen mindestens zehnmal größer ist als die Gesamtfläche der kleinsten Öffnung (71, 72).

5. Insektenfalle gemäß Anspruch 1, **dadurch gekennzeichnet, dass** die transparente Fläche des Fensters (2) mindestens 15% der Fläche der gesamten Behälterwandung (30, 40, 50, 60, 65, 70) einschließlich der Öffnungen (41, 51-53, 66, 71, 72) entspricht.

6. Insektenfalle gemäß Anspruch 1, **dadurch gekennzeichnet, dass** der Behälter (10) eine quader- oder würfelförmige, verschließbare Faltschachtel mit anhängenden Seitenklappen (40, 65) ist, wobei mindestens eine der großen Seitenwände (30, 60) eine Fensterinnenöffnung (31) aufweist, die über eine transparente Klebefolie (2) verschließbar ist.

7. Insektenfalle gemäß Anspruch 6, **dadurch gekennzeichnet, dass** vor der großen Seitenwandung (30), die eine Fensterinnenöffnung (31) aufweist, ein Deckel (80) angeordnet ist, der eine Fensteröffnung (81) hat, die vor der Fensterinnenöffnung (31) liegt, wobei die Fensterinnenöffnung (81) und die Fensteröffnung (31) die Klebefolie (2) rahmenartig einspannen.

8. Insektenfalle gemäß Anspruch 1, **dadurch gekennzeichnet, dass** der Klebstoff (3) nicht vollflächig innerhalb des Randes (4) auf der Klebefolie (2) aufgetragen ist.

9. Insektenfalle gemäß Anspruch 1, **dadurch gekennzeichnet, dass** der Klebstoff (3) einen als Insektenlockstoff wirkenden Wirkstoff beinhaltet.

10. Insektenfalle gemäß Anspruch 1, **dadurch gekennzeichnet, dass** im Innenraum (1) mindestens eine Lockvorrichtung angeordnet ist, die optische, thermische, akustische und/oder chemische Reize abgibt.

11. Insektenfalle gemäß Anspruch 10, **dadurch gekennzeichnet, dass** die Lockvorrichtung mittels elektrischer oder chemischer Fremdenergie betrieben wird.

## Claims

1. Insect trap consisting of a container (10) which surrounds an inner chamber (1) and comprises at least one opening (41, 51-53, 66, 71, 72) and at least one releasable carrier film (2) with an adhesive layer (3) which is accessible from the inner chamber (1), the carrier film (2) being a transparent window in a wall of the container (10) at least in the region of the adhesive layer (3), **characterized in that** the adhesive layer (3) of the carrier film (2) has an outer edge (4) which does not reach as far as the window opening of the wall (30) supporting the carrier film (2), and **in that** at least two gripping elements (33) are arranged in the wall (30) supporting the carrier film (2) for positioning, releasable fixing of the carrier film (2).

2. Insect trap according to Claim 1, **characterized in that** the transparent area of the window (2) is larger than the overall area of all the openings (41, 51-53, 66, 71, 72).

3. Insect trap according to Claim 1, **characterized in that** the transparent area of the window (2) is, in a container (10) with openings of different size, at least six times larger than the overall area of the largest opening (41, 66).

4. Insect trap according to Claim 1, **characterized in that** the transparent area of the window (2) is, in a container (10) with openings of different size, at least ten times larger than the overall area of the smallest opening (71, 72).

5. Insect trap according to Claim 1, **characterized in that** the transparent area of the window (2) corresponds to at least 15% of the overall area of the container walls (30, 40, 50, 60, 65, 70) including the openings (41, 51-53, 66, 71, 72).

6. Insect trap according to Claim 1, **characterized in that** the container (10) is a parallelepipedal or cuboid closable folding box with attached side flaps (40, 65), at least one of the large side walls (30, 60) having a window inner opening (31) which can be closed by means of a transparent adhesive film (2).

7. Insect trap according to Claim 6, **characterized in that** a lid (80), which has a window opening (81) which lies in front of the window inner opening (31), is arranged in front of the large side wall (30) which has a window inner opening (31), the window inner opening (81) and the window opening (31) holding the adhesive film (2) in a frame-like way.

8. Insect trap according to Claim 1, **characterized in that** the adhesive (3) is not applied to the adhesive film (2) over the entire surface within the edge (4).

9. Insect trap according to Claim 1, **characterized in that** the adhesive (3) contains an active ingredient acting as an insect lure.

10. Insect trap according to Claim 1, **characterized in that** at least one lure device, which emits optical, thermal, acoustic and/or chemical stimuli, is arranged in the inner chamber (1).

11. Insect trap according to Claim 10, **characterized in that** the lure device is operated by means of external electrical or chemical energy.

## Revendications

1. Piège à insecte constitué d'un récipient (10) entourant un espace interne (1) qui comprend au moins une ouverture (41, 51-53, 66, 71, 72) et au moins un film de support détachable (2) avec une couche adhésive (3) accessible depuis l'espace interne (1), le film de support (2), au moins dans la région de la couche adhésive (3), étant une fenêtre transparente dans une paroi du récipient (10),
**caractérisé en ce que**
la couche adhésive (3) du film de support (2) a un bord extérieur (4), qui n'atteint pas l'ouverture de fenêtre de la paroi (30) portant le film de support (2), et
**en ce que** dans la paroi (30) portant le film de support (2) sont disposés au moins deux éléments de serrage (33) pour la fixation desserrable, en position, du film de support (2).

2. Piège à insecte selon la revendication 1, **caractérisé en ce que** la surface transparente de la fenêtre (2) est plus grande que la surface totale de toutes les ouvertures (41, 51-53, 66, 71, 72).

3. Piège à insecte selon la revendication 1, **caractérisé en ce que** la surface transparente de la fenêtre (2), pour un récipient (10) ayant des ouvertures de différentes tailles, est au moins six fois plus grande que la surface totale de la plus grande ouverture (41, 66).

4. Piège à insecte selon la revendication 1, **caractérisé en ce que** la surface transparente de la fenêtre (2), pour un récipient (10) ayant des ouvertures de différentes tailles, est au moins dix fois plus grande que la surface totale de la plus petite ouverture (71, 72).

5. Piège à insecte selon la revendication 1, **caractérisé en ce que** la surface transparente de la fenêtre (2) correspond à au moins 15% de la surface de toute la paroi du récipient (30, 40, 50, 60, 65, 70) y compris les ouvertures (41, 51-53, 66, 71, 72).

6. Piège à insecte selon la revendication 1, **caractérisé en ce que** le récipient (10) est une boîte pliante de forme carrée ou cubique, refermable, avec des volets latéraux accrochés (40, 65), au moins l'une des grandes parois latérales (30, 60) présentant une ouverture intérieure de fenêtre (31) qui peut être fermée par le biais d'un film adhésif transparent (2).

7. Piège à insecte selon la revendication 6, **caractérisé en ce que**, devant la grande paroi latérale (30) qui présente une ouverture intérieure de fenêtre (31), on dispose un couvercle (80) qui a une ouverture de fenêtre (81), qui se situe devant l'ouverture intérieure de fenêtre (31), l'ouverture intérieure de fenêtre (81) et l'ouverture de fenêtre (31) encadrant le film adhésif (2) en forme de cadre.

8. Piège à insecte selon la revendication 1, **caractérisé en ce que** l'adhésif (3) n'est pas appliqué sur toute la surface à l'intérieur du bord (4) sur le film adhésif (2).

9. Piège à insecte selon la revendication 1, **caractérisé en ce que** l'adhésif (3) contient une substance active agissant en tant qu'agent attractif pour les insectes.

10. Piège à insecte selon la revendication 1, **caractérisé en ce que** dans l'espace interne (1) est disposé au moins un dispositif attractif, qui émet des stimuli optiques, thermiques, acoustiques et/ou chimiques.

11. Piège à insecte selon la revendication 10, **caractérisé en ce que** le dispositif attractif est entraîné au moyen d'énergie extérieure électrique ou chimique.
